# EUROPEAN PATENT APPLICATION

(11) **EP 0 550 826 A1**
(43) Date of publication of application: **14.07.1993**
(21) Application number: 92120166.1
(22) Date of filing: 26.11.1992
(51) Int. Cl.: G11B 5/53

(54) **A scanner mount for a rotary head scanner**

(30) Priority: 20.12.1991 US 812527
(71) Applicant: Datatape Incorporated, Pasadena, California 91109-7014 (US)
(72) Inventor: Grant, Frederic Francis, c/o Eastman Kodak Company, Rochester, New York 14650-2201 (US)
(74) Representative: Maury, Richard Philip

(57) **Abstract**

A helical scan magnetic tape recorder includes a scanner mount (29) for mounting a rotary head scanner (24) and associated tape guide elements.

## Description

This invention relates in general to magnetic tape recording apparatus and more particularly to a new and improved mount for mounting a rotary head scanner in a helical scan magnetic tape recorder.

Helical scan magnetic tape recorders are widely used to store analog and digital information on magnetic tape contained in single reel cartridges or two reel cassettes. A helical scan magnetic tape recorder includes a rotary head scanner, tape guide elements which guide magnetic tape from a supply reel, around the rotary head scanner in a helical path, and to a take-up reel. In such a recorder, the tape guide elements and rotary head scanner are generally mounted directly on a supporting frame as individual components. This direct method of mounting presents problems in precise alignment of the various recorder components and in interchangeability of parts. Since the rotary heads are typically replaced several times over the life of the recorder, it is desirable to simplify the removal and replacement of the rotary head scanner and realignment of a new scanner with the tape guide elements.

According to the present invention, there is provided a scanner mount for a rotary head scanner in a helical scan magnetic tape recorder which provides simplified removal and replacement of the scanner in a recorder, interchangeability between recorders and more efficient machining, alignment and inspection of the scanner assembly. The scanner includes a mounting lip having a planar surface which mounts to a planar surface of the recorder frame, a cylindrical bore having an axis which forms an angle with the perpendicular to the planar surfaces, a planar ledge within said bore which extends perpendicularly to said cylindrical bore.

FIG. 1 is a diagrammatic view of a helical scan magnetic tape recorder including an embodiment of the present invention.

FIGS. 2 and 3 are top plan and side elevational views of an embodiment of the present invention.

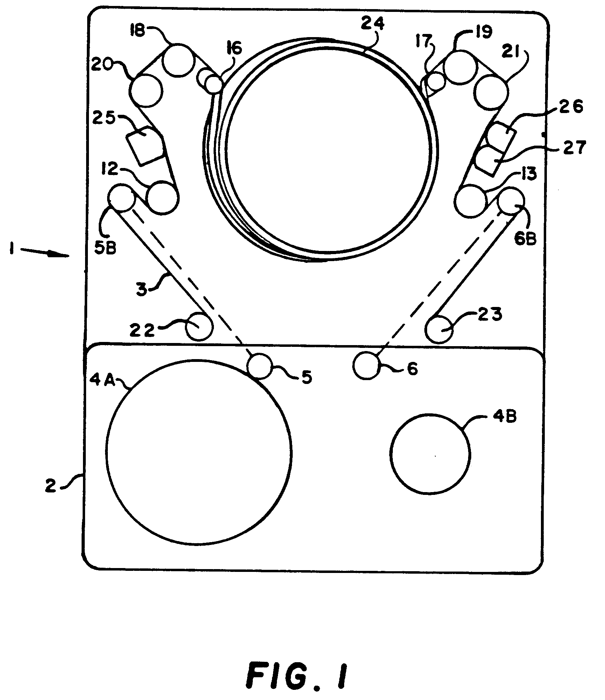

Referring to FIG. 1, there is shown a helical scan magnetic tape recorder 1 which receives a cassette 2 of magnetic tape 3 wound between supply and take-up reels 4A and 4B. Tape 3 is threaded from cassette 2 by rollers 5, 6 to operating positions 5B, 6B. Tape 3 follows a transport path about a plurality of elements including guide rollers 22, 23, capstans 12, 13, guide rollers 20, 18, 19, 21, tilted posts 16, 17, rotary head scanner 24 and stationary magnetic heads 25, 26, 17.

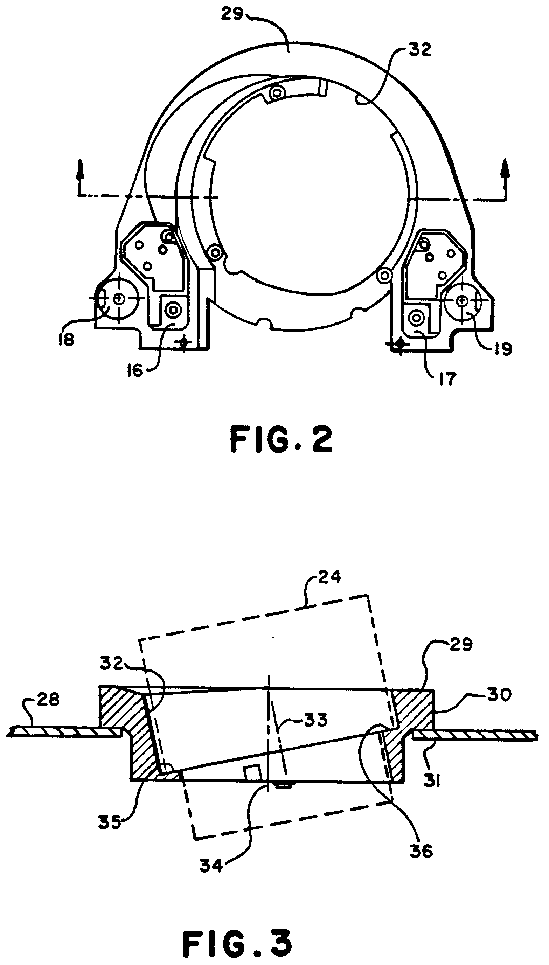

According to the present invention, as shown in FIGS. 2 and 3, scanner 24 is mounted on frame 28 of recorder 1 by means of scanner mount 29. Mount 29 has a lip 30 having a planar surface 31 which mounts flat on planar frame 28. Mount 29 has a cylindrical bore 32 having an axis 33 which forms an angle with the perpendicular 34 to frame 28. A planar cylindrical ledge 35 within bore 32 extends perpendicularly to bore 32 and engages with cylindrical ledge 36 of scanner 24. Scanner 29 also mounts tilt posts 16, 17 and guide rollers 18, 19.

## Claims

1. In a helical scan magnetic tape recorder (1) including a planar frame (28) and a cylindrical rotary head scanner (24), scanner mounting apparatus characterized by:
a scanner mount (29) having a peripheral lip (30) with a planar surface (31) for mounting on said planar frame (28) and having a cylindrical bore (32) with an axis (33) which extends at an angle to a perpendicular (34) to said planar frame (28) and said bore (32) having a cylindrical planar ledge (35) which extends perpendicularly to said cylindrical bore (32), for mounting said scanner (24).

2. The apparatus of claim 1 including means for mounting tilted tape guide posts (16), (17).

3. The apparatus of claim 2 including means for mounting guide rollers (18), (19) adjacent respective tape guide posts (16), (17).
